# EUROPÄISCHE PATENTANMELDUNG

(11) **EP 1 184 862 A2**
(43) Veröffentlichungstag der Anmeldung: **06.03.2002**
(21) Anmeldenummer: 01000409.1
(22) Anmeldetag: 29.08.2001
(51) Int. Cl.: G11B 17/028

(54) **Gerät zum Spielen von Speicherplatten**

(30) Priorität: 02.09.2000 DE 10043298
(71) Anmelder: Philips Corporate Intellectual Property GmbH, 52064 Aachen (DE); Koninklijke Philips Electronics N.V., 5621 BA Eindhoven (NL)
(72) Erfinder: Kunze, Norbert, Habsburgerallee 11, 52064, Aachen (DE)
(74) Vertreter: Volmer, Georg, Dipl.-Ing.

(57) **Zusammenfassung**

Die Erfindung bezieht sich auf ein Gerät zum Spielen von Speicherplatten, die um eine zentrale Drehachse (13) von einem Antriebsmotor (15) in Umlauf versetzbar sind und die mit einer optischen Einheit (4) zusammenwirken, die beim Umlaufen auf einer Aktivseite Informationen einträgt oder ausliest, wobei die Speicherplatte (8) mit Hilfe einer Druckvorrichtung (5), die auf eine ihrer Plattenflächen (8c) einwirkt, gegen einen Anlageteller (14) drückbar ist, um in ihrer Spielstellung gehalten zu werden und Eigenschwingungen der Speicherplatte (8) zu verhindern, und wobei der Anlageteller (14) einen Durchmesser aufweist, der etwa dem der Speicherplatte (8) entspricht. Die Druckvorrichtung (5) wirkt bei dem Gerät nur auf den informationsfreien Mittelbereich (9) der Speicherplatte (8) ein und ist frei drehbar. Der Anlageteller (14) hat beim Andrücken der Labelseite (8a) der Speicherplatte (8) mit dieser Reibschluss und ist als Drehteller ausgelegt, der von dem Antriebsmotor (15) in Umlauf versetzbar ist.

## Beschreibung

Die Erfindung bezieht sich auf ein Gerät zum Spielen von Speicherplatten, die um eine zentrale Drehachse von einem Antriebsmotor in Umlauf versetzbar sind und die mit einer optischen Einheit zusammenwirken, die beim Umlaufen auf einer Aktivseite Informationen einträgt oder ausliest, wobei die Speicherplatte mit Hilfe einer Druckvorrichtung, die auf eine ihrer Plattenflächen einwirkt, gegen einen Anlageteller drückbar ist, um in ihrer Spielstellung gehalten zu werden und Eigenschwingungen der Speicherplatte zu verhindern, und wobei der Anlageteller einen Durchmesser aufweist, der etwa dem der Speicherplatte entspricht.

In der JP-A-09259496 ist ein Gerät zum Abspielen von optischen Speicherplatten beschrieben. Das Gerät hat einen Plattenteller und einen Klemmteller. Der Plattenteller und der Klemmteller haben Durchmesser, die dem der optischen Speicherplatte entsprechen. Der unter der Speicherplatte befindliche Plattenteller wird zum Spielen drehend angetrieben; er nimmt die optische Speicherplatte auf und kann diese nach oben gegen den frei drehbaren Klemmteller drücken. Die mit Informationen zu versehende oder versehene Seite der Speicherplatte befindet sich unten. Dementsprechend befindet sich auch die optische Einheit des Gerätes unten und liest diese aus oder beschreibt sie von unten her. Damit das Laserlicht, das durch den Plattenteller hindurchgehen muss, die Speicherplatte erreicht, besteht dieser aus einem transparenten Material. Plattenvibrationen werden zwischen den großflächigen Tellern zwar unterdrückt; die Konstruktion ist aber gegen Verschmutzungen empfindlich.

Auch aus der JP-A-60 160 059 ist eine Gerätekonstruktion bekannt, mit der Eigenschwingungen einer optischen Speicherplatte vermieden werden sollen. Auf die Oberseite der Speicherplatte wird dabei während des Betriebes eine Dämpfungsplatte aufgelegt. Der zum Auflegen eingesetzte Mechanismus und der Raumbedarf sind bei kleinbauenden Geräten nicht vertretbar.

Es ist Aufgabe der Erfindung, ein Gerät der eingangs erwähnten Art zu schaffen, das einfach aufgebaut ist, das in der räumlichen Ausdehnung klein ist und bei dem Schwingungen der Speicherplatte gegenüber der optischen Einheit vor allem auch bei einer Verwendung in einem Fahrzeug unterbunden sind.

Die gestellte Aufgabe ist erfindungsgemäß gelöst durch ein Gerät mit folgenden kennzeichnenden Merkmalen:
a) die Druckvorrichtung wirkt nur auf den informationsfreien Mittelbereich der Speicherplatte ein,
b) die gegen den informationsfreien Mittelbereich der Speicherplatte drückende Druckvorrichtung ist frei drehbar,
c) der Anlageteller hat beim Andrücken der Speicherplatte mit dieser Reibschluss und ist als Drehteller ausgelegt, der von dem Antriebsmotor in Umlauf versetzbar ist,
d) der Anlageteller ist mit der Labelseite der Speicherplatte in Kontakt bringbar.

Bei einem derartigen Gerät sind die Funktionen gegenüber den bekannten Geräten umgekehrt. Der bekannte Anlageteller, gegen den die Speicherplatte nach oben gedrückt wird, ist nicht mehr frei drehbar, sondern zum angetriebenen Drehteller umfunktioniert. Der bisherige, angetriebene Drehteller des Gerätes ist zu einem frei drehbaren Andruckteil umfunktioniert und hat nur noch die Aufgabe, den Mittelteil der Speicherplatte gegen den Anlageteller zu drücken. Diese Funktionsumkehr bringt wesentliche Vorteile mit sich. Die Konstruktion benötigt wenig Raum; sie lässt sich also klein halten; die Speicherplatte kann nicht frei schwingen und das Laserlicht kann ungehindert auf die Speicherplatte treffen, sodass die eingangs erwähnten Verschmutzungen nicht auftreten können. Diese Voraussetzungen machen sie für den Einbau in Kraftfahrzeugen besonders geeignet.

Der Anlageteller liegt mit Reibschluss an der Labelseite der Speicherplatte an. Die Speicherplatte wird also von der Label-Seite her angetrieben. Da die Speicherplatte mit Reibschluss in der Nähe ihres Außenrandes angedrückt wird, kann auf aufwendige Klemmmechanismen verzichtet werden.

Nach einer weiteren Ausgestaltung der Erfindung ist vorgesehen, dass der Antriebsmotor den Anlageteller über eine Peese in Umlauf versetzt. Bei einer anderen Variante des Antriebes ist der Anlageteller selbst als Antriebsmotor ausgebildet. Es wird der räumlich und wirtschaftlich geeignetste Antrieb zum Einsatz kommen.

Nach einer weiteren Ausgestaltung der Erfindung ist vorgesehen, dass die Druckvorrichtung einen federbelasteten Druckteller aufweist, dessen Durchmesser höchstens den Durchmesser der informationsfreien Mitte der Speicherplatte erreicht. Diese Größe reicht für einen Andruck aus und lässt Platz frei für das Wirken der optischen Einheit.

Nach einer weiteren Ausgestaltung der Erfindung ist vorgesehen, dass die Speicherplatte verstärkt mit ihrem Randbereich gegen den Anlageteller gedrückt wird, dessen äußerer Rand leicht erhaben ist, wobei die Druckvorrichtung den Mittelbereich der Speicherplatte in den Hohlraum so hineindrückt, dass die Speicherplatte in ihrer Mitte in den Hohlraum des Anlagetellers hinein auch annähernd kegelförmig durchgebogen wird. Dieses Durchbiegen verstärkt die Reibverbindung zwischen der Speicherplatte und dem Anlageteller, wodurch die Speicherplatte an ihrem Rand verstärkt abgestützt wird Zur Verbesserung des Reibschlusses ist auch eine Gummierung des Anlagetellers möglich.

Nach einer weiteren Ausgestaltung der Erfindung ist in Verbindung mit der Plattendurchbiegung vorgesehen, dass die Lese- und/bder Schreibeinheit auf einer gewölbten, der Durchbiegung der Speicherplatte angepassten Führung geführt ist. Mit der Vorspannung der Speicherplatte und der angepassten Führung der optischen Einheit sind sehr exakte Arbeitsbedingungen geschaffen.

Nach einer weiteren Ausgestaltung der Erfindung ist vorgesehen, dass die Lese- und/oder Schreibeinheit mit der Druckvorrichtung einerseits und dem Anlageteller andererseits auseinanderfahrbar sind. Vorzugsweise ist dazu der Anlageteller höhenverstellbar. Es ist eine einfache Möglichkeit, bei geringem Raumbedarf einen Plattenwechsel vorzunehmen.

Nach einer weiteren Ausgestaltung der Erfindung ist vorgesehen, dass dem exakten Zusammenführen von Lese- und/oder Schreibeinheit mit der Druckvorrichtung einerseits und dem Anlageteller andererseits Zentrierungen dienen. Im weiterer Ausgestaltung der Erfindung ist vorgesehen, dass die Zentrierungen aus gegeneinander gerichteten Keilen oder Kegeln an einem der Geräteteile bestehen, die mit V-förmigen oder kegelförmigen, nach oben offenen Nuten am anderen Geräteteil zusammenwirken.

Die Erfindung wird anhand der Zeichnung näher erläutert. Es zeigen:

Fig. 1 zeigt in vereinfachter Darstellung ein Laufwerk eines Gerätes zum Spielen von optischen Speicherplatten, bei dem die Speicherplatte an der Plattenoberfläche, die frei von optisch eingebrachten oder einbringbaren Informationen ist, an einem Anlageteller anliegt und von diesem in Drehung versetzbar ist.

Fig. 2 eine Prinzipskizze des Zusammenspiels von gewölbter Speicherplatte und gewölbter Führung der optischen Einheit mit übertrieben dargestellter Wölbung

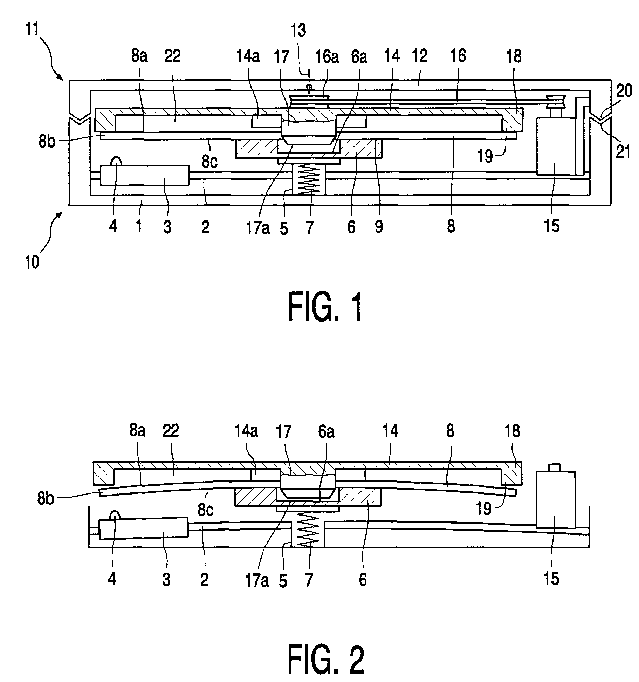

Ein in Fig. 1 dargestelltes Laufwerk eines Spielgerätes für optische Speicherplatten hat einen Grundrahmen 1, auf dem eine Führung 2 für die Verschiebung eines Schlittens 3 einer optischen Einheit 4 angeordnet ist. Weiterhin stützt sich am Grundrahmen 1 eine Druckvorrichtung 5 ab, die einen Druckteller 6 aufweist, der beispielsweise mittels einer Feder 7 gegen eine optische Speicherplatte 8 drückbar ist. Der Druckteller 6 ist frei drehbar; er darf nicht größer sein als der informationsfreie Mittelbereich 9 der Speicherplatte 8. Der Grundrahmen 1, die Führung 2, der Schlitten 3 mit der optischen Einheit 4 und die Druckvorrichtung sind Bestandteile des Unterteiles 10 des Laufwerkes

Auf das Unterteil 10 ist ein Oberteil 11 aufsetzbar. Das Oberteil 11 hat einen Oberrahmen 12, der zentral einen um eine Drehachse 13 drehbaren, als Drehteller wirksamen Anlageteller 14 trägt. Der Anlageteller 14 hat etwa den Durchmesser der Speicherplatte 8. Als Drehantrieb für den Anlageteller 14 dient ein Motor 15, der den Anlageteller 14 über eine Peese 16 und eine Rolle 16a in Umlauf versetzer kann. Es ist aber auch möglich, den Anlageteller 14 selbst auf nicht dargestellte Weise als Rotor eines Motors auszubilden. Der Anlageteller 14 hat einen zentralen Zentrieransatz 17, der in das zentrale Loch der Speicherplatte 8 eingreifen kann. Außerdem hat der Anlageteller 14 an seinem Tellerrand 18 einen nach unten vorstehenden Kragen 19, gegen den die Speicherplatte 14 mit ihrem Plattenrand 8b drückbar ist.

Das Oberteil 11 des Laufwerkes ist höhenverstellbar und damit nach oben abhebbar, um die Speicherplatte 8 im Rahmen eines Ladevorganges einführen und herausnehmen zu können. Es sind Zentrierungen 20, 21 vorgesehen, die dafür sorgen, dass Oberteil 11 und Unterteil 10 nach jedem Auseinanderfahren wieder genau passend und zentriert zusammenkommen. Diese Zentrierungen bestehen im Ausführungsbeispiel beispielsweise aus nach unten gerichteten Keilen oder Kegeln 20 am Oberteil 11 des Laufwerkes, die mit V-förmigen oder kegelförmigen, nach oben offenen Nuten 21 am Unterteil 10 zusammenwirken.

Dieser Aufbau ist sehr raumsparend. Zugleich erlaubt er aber einen von störenden Schwingungen oder Flatterbewegungen der Speicherplatte freien Betrieb vor allem in einem Fahrzeug, das stets Erschütterungen des Fahrwerkes auf das Laufwerk überträgt. Um dies zu erreichen, wird die Speicherplatte 8 in besonderer Weise betrieben. Die Speicherplatte 8 wird, wenn das Oberteil 11 und das Unterteil 10 zusammenfahren, mittels des Drucktellers 6 mit ihrer Labelseite 8a nach oben gegen den Anlageteller 14 gedrückt. Der Druckteller 6 drückt dementsprechend gegen die Aktivseite 8c der Speicherplatte 8. Die Speicherplatte 8 fährt dabei über den zentralen Zentriereinsatz 17 und zentriert sich. Der Plattenrand 8b legt sich an den Kragen 19 des Tellerrandes 18 an. So bildet sich ein Hohlraum 22 zwischen dem Anlageteller 14 und der Speicherplatte 8 aus. Der Andruck des Drucktellers 6 ist so eingestellt, dass er die Speicherplatte 8 in einem vorgegebenen Ausmaß in den Hohlraum 22 hinein bis zu einem Anschlag 14a durchbiegt. Beispielsweise kann das Maß der Durchbiegung dadurch festgelegt werden, dass der Druckteller 6 sich mit einer Fläche 6a an die Vorderfläche 17a des Zentrieransatzes 17 anlegt oder dass der Anlageteller 14 in der Mitte die zweite, gegenüber dem Außenrand 18 zurückliegende Abstützung 14a hat. Wenn der Anlageteller 14 auch mit einer die Anlagereibung erhöhenden, nicht dargestellten Gummierung versehen sein kann, so stellt diese Durchbiegung eine gezielte Erhöhung der Reibkraft dar. Außerdem ist der Plattenrand 8b eindeutig festgelegt. Eigenbewegungen des Plattenrandes sind so optimal unterbunden.
Die Durchbiegung der Speicherplatte 8 verlangt eine Anpassung der Bahn, auf der sich der Schlitten 3 der optischen Einheit 4 bewegt. Fig. 2 zeigt übertrieben dargestellt, wie die Wölbung der Führung 2 des Schlittens der optischen Einheit und die Wölbung der Speicherplatte 8 aneinander angepasst sind.

## Patentansprüche

1. Gerät zum Spielen von Speicherplatten, die um eine zentrale Drehachse (13) von einem Antriebsmotor (15) in Umlauf versetzbar sind und die mit einer optischen Einheit (4) zusammenwirken, die beim Umlaufen auf einer Aktivseite (8c) Informationen einträgt oder ausliest, wobei die Speicherplatte (8) mit Hilfe einer Druckvorrichtung (5), die auf eine ihrer Plattenflächen (8c) einwirkt, gegen einen Anlageteller (14) drückbar ist, um in ihrer Spielstellung gehalten zu werden und Eigenschwingungen der Speicherplatte (8) zu verhindern, und wobei der Anlageteller (14) einen Durchmesser aufweist, der etwa dem der Speicherplatte (8) entspricht,
**gekennzeichnet durch** folgende Merkmale:
a) die Druckvorrichtung (5) wirkt nur auf den informationsfreien Mittelbereich (9) der Speicherplatte (8) ein,
b) die gegen den informationsfreien Mittelbereich (9) der Speicherplatte (8) drückende Druckvorrichtung (5) ist frei drehbar,
c) der Anlageteller (14) hat beim Andrücken der Speicherplatte (8) mit dieser Reibschluss und ist als Drehteller ausgelegt, der von dem Antriebsmotor (15) in Umlauf versetzbar ist,
d) der Anlageteller (14) ist mit der Labelseite (8a) der Speicherplatte (8) in Kontakt bringbar.

2. Gerät nach Anspruch 1,
**dadurch gekennzeichnet,**
**dass** der Antriebsmotor (15) den Anlageteller (14) über eine Peese (16) in Umlauf versetzt.

3. Gerät nach einem der Ansprüche 1 und/oder 2,
**dadurch gekennzeichnet,**
**dass** der Anlageteller (14) selbst als Antriebsmotor ausgebildet ist.

4. Gerät nach einem oder mehreren der Ansprüche 1 bis 3,
**dadurch gekennzeichnet,**
**dass** die Druckvorrichtung (5) einen federbelasteten Druckteller (6) aufweist, dessen Durchmesser höchstens den Durchmesser der informationsfreien Mitte (9) der Speicherplatte (8) erreicht.

5. Gerät nach einem oder mehreren der Ansprüche 1 bis 4,
**dadurch gekennzeichnet,**
**dass** die Speicherplatte (8) verstärkt mit ihrem Randbereich (8b) gegen den Anlageteller (14) gedrückt wird, dessen äußerer Rand leicht erhaben ist, wobei die Druckvorrichtung (5) den Mittelbereich (9) der Speicherplatte (8) in den Hohlraum (22) so hineindrückt, dass die Speicherplatte (8) in ihrer Mitte in den Hohlraum (22) des Anlagetellers (14) hinein auch annähernd kegelförmig durchgebogen wird.

6. Gerät nach einem oder mehreren der Ansprüche 1 bis 5,
**dadurch gekennzeichnet,**
**dass** die Lese- und/oder Schreibeinheit (4) auf einer gewölbten, der Durchbiegung der Speicherplatte (8) angepassten Führung (2) geführf ist.

7. Gerät nach einem oder mehreren der Ansprüche 1 bis 6,
**dadurch gekennzeichnet,**
**dass** die Lese- und/oder Schreibeinheit (4) mit der Druckvorrichtung (5) einerseits und dem Anlageteller (14) andererseits auseinanderfahrbar sind.

8. Gerät nach einem oder mehreren der Ansprüche 1 bis 7,
**dadurch gekennzeichnet,**
**dass** der Anlageteller (14) höhenverstellbar ist.

9. Gerät nach einem oder mehreren der Ansprüche 1 bis 8,
**dadurch gekennzeichnet,**
**dass** dem exakten Zusammenführen von Lese- und/oder Schreibeinheit (4) mit der Druckvorrichtung (5) einerseits und dem Anlageteller (14) andererseits Zentrierungen (20, 21) dienen.

10. Gerät nach Anspruch 9,
**dadurch gekennzeichnet,**
**dass** die Zentrierungen aus gegeneinander gerichteten Keilen oder Kegeln (20) an einem der Geräteteile (11) bestehen, die mit V-förmigen oder kegelförmigen, nach oben offenen Nuten (21) am anderen Geräteteil (10) zusammenwirken. 1.
